(19) Europäisches Patentamt
European Patent Office
Office européen des brevets

(11) **EP 2 859 222 B1**

(12) **EUROPÄISCHE PATENTSCHRIFT**

(45) Veröffentlichungstag und Bekanntmachung des Hinweises auf die Patenterteilung:
**18.09.2019 Patentblatt 2019/38**

(21) Anmeldenummer: **13716164.2**

(22) Anmeldetag: **28.03.2013**

(51) Int Cl.:
**F03D 7/02** (2006.01)

(86) Internationale Anmeldenummer:
**PCT/AT2013/000052**

(87) Internationale Veröffentlichungsnummer:
**WO 2013/166531 (14.11.2013 Gazette 2013/46)**

(54) **ENERGIEGEWINNUNGSANLAGE, INSBESONDERE WINDKRAFTANLAGE**

ENERGY PRODUCTION PLANT, IN PARTICULAR WIND TURBINE

INSTALLATION DE PRODUCTION D'ÉNERGIE, EN PARTICULIER ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.05.2012 AT 5582012**

(43) Veröffentlichungstag der Anmeldung:
**15.04.2015 Patentblatt 2015/16**

(73) Patentinhaber: **Hehenberger, Gerald**
**9020 Klagenfurt (AT)**

(72) Erfinder: **Hehenberger, Gerald**
**9020 Klagenfurt (AT)**

(74) Vertreter: **Beer & Partner Patentanwälte KG**
**Lindengasse 8**
**1070 Wien (AT)**

(56) Entgegenhaltungen:
WO-A1-99/36695          WO-A2-2010/108207
DE-A1- 19 634 464      JP-A- S5 977 082
US-A1- 2007 216 164    US-A1- 2011 169 268

**Beschreibung**

Die Erfindung betrifft ein Verfahren zum Regeln des Betriebes eines Antriebsstrangs einer Energiegewinnungsanlage.

Aus der US 2011/0169268 A, der US 2007/0216164 A1, der JP S59 77082 A und der DE 196 464 A sind Verfahren zum Regeln des Betriebes eines Antriebsstrangs einer Energiegewinnungsanlage mit einer mit einem Netz verbundenen elektrischen Maschine und mit einem Rotor bekannt, der mit der elektrischen Maschine verbunden ist, wobei eine Betriebsbremse bzw. ein Retarder vorgesehen ist, um Überdrehzahlen des Rotors zu vermeiden. In der US 2011/0169268 A und der JP S59 77082 A sind sowohl eine Betriebsbremse als auch eine Notbremse vorgesehen.

Die technische Entwicklung im Bereich Windkraftanlagen führt u.a. zu immer größeren Rotordurchmessern und Turmhöhen. Damit verursachen große Leistungsschwankungen durch z.B. Netzfehler oder starke Windböen eine entsprechend große Auslenkung am Turm, was wiederum zu hohen Belastungen an der Anlage führt. Aus diesem Grund werden z.B. Windkraftanlagen, welche zur Realisierung einer variablen Rotordrehzahl meist Drehstromgeneratoren in Kombination mit Vollumrichtern einsetzen, mit großen Widerständen über sogenannte Chopper mit dem Gleichstromzwischenkreis des Vollumrichters verbunden, damit bei spontanem Verlust der Last (z.B. bei Netzfehler) die Last am Rotor aufrecht erhalten und damit eine schnelle Verstellung der Rotorblätter vermieden werden kann. Eine schnelle Verstellung der Rotorblätter wäre bei schnellem Lastverlust notwendig, um eine Überdrehzahl des Rotors zu vermeiden, würde jedoch zu einer entsprechend großen Änderung des Rotorschubes führen und damit den Turm stark belasten. Dieses Problem wird umso größer, je höher der Turm ist.

Ähnliche Probleme können auch bei z.B. Wasserkraftanlagen auftreten, indem z.B. bei länger andauernden Netzfehlern die Turbine aufgrund fehlender Last in Überdrehzahl geht, was u.U. eine Beschädigung derselben hervorrufen würde. Ebenso gibt es auch für Antriebe für industrielle Anwendungen Betriebszustände, bei denen bei z.B. Netzausfall für einen kurzen Zeitraum ein an- bzw. abtriebsseitiges Bremsmoment erforderlich ist, um das System in einen sicheren Zustand zu bringen.

Die Zeitdauer zur Erkennung des Fehlers bis zum Stillstand der Anlage oder bis zum Ende des Netzfehlers kann bis zu mehreren Sekunden dauern, womit eine entsprechend große Dimensionierung der oben erwähnten Widerstände erforderlich ist.

Die für Anlagen mit Vollumrichtern beschriebene Methode kann jedoch nicht mit klassischen Differenzialsystemen (elektromechanisch, hydrostatisch und hydrodynamisch) realisiert werden, da in diesen Fällen der Generator direkt mit dem Netz verbunden ist. Gleiches gilt u.a. auch für sogenannte doppeltgespeiste Drehstrommaschinen.

Aufgabe der Erfindung ist es daher, dieses Problem zu lösen.

Gelöst wird diese Aufgabe mit einem Verfahren mit den Merkmalen des Anspruchs 1.

Indem hinter dem Rotor der Energiegewinnungsanlage bzw. der industriellen Arbeitsmaschine eine Betriebsbremse angebracht wird, welche ein bremsendes Drehmoment in den Triebstrang einbringen kann, kann bei z.B. Windkraftanlagen das Pitchsystem verzögert reagieren, was zu einer entsprechend langsamen Änderung im Schub der Anlage führt und somit die Belastung insbesondere des Turmes bzw. der Tragwerkstruktur möglichst klein gehalten wird.

Indem zwischen dem Rotor der Energiegewinnungsanlage bzw. der industriellen Arbeitsmaschine und dem Generator eine Betriebsbremse angebracht wird, welche für eine begrenzte Zeit ein bremsendes Drehmoment in den Triebstrang einbringen kann, kann bei z.B. Windkraftanlagen das Pitchsystem verzögert reagieren, was zu einer entsprechend langsamen Änderung im Schub der Anlage führt und somit die Belastung insbesondere des Turmes bzw. der Tragwerkstruktur möglichst klein gehalten wird.

Bevorzugte Ausführungsformen der Erfindung sind Gegenstand der Unteransprüche.

Nachfolgend werden bevorzugte Ausführungsformen der Erfindung mit Bezug auf die angeschlossenen Zeichnungen erläutert. Es zeigt:

Fig. 1    den Triebstrang einer Windkraftanlage mit permanentmagneterregtem Synchrongenerator, Vollumrichter und Zwischenkreis-Chopper mit Widerstand gemäß Stand der Technik,

Fig. 2    den Triebstrang einer Windkraftanlage mit einem Differenzial-Antrieb gemäß Stand der Technik,

Fig. 3    den Triebstrang einer Windkraftanlage mit einem Differenzial-Antrieb gemäß der Erfindung,

Fig. 4    den Triebstrang einer Windkraftanlage mit einem Differenzial-Antrieb gemäß einer weiteren Ausführungsform der Erfindung,

Fig. 5    eine realisierbare Kennlinie für ein Betriebsbremssystem gemäß Erfindung und

Fig. 6    eine erfindungsgemäße Kennlinie für ein Betriebsbremssystem im Vergleich zu einer typischen Drehmomentkennlinie einer Windkraftanlage.

Die Leistung des Rotors einer Windkraftanlage errechnet sich aus der Formel

$$\text{Rotor-Leistung} = \text{Rotorfläche} * \text{Leistungsbeiwert} * \text{Luftdichte}/2 * \text{Windgeschwindigkeit}^3$$

wobei der Leistungsbeiwert abhängig von der Schnelllaufzahl (= Verhältnis Blattspitzen-Geschwindigkeit zu Windgeschwindigkeit) des Rotors der Windkraftanlage ist. Der Rotor einer Windkraftanlage ist für einen optimalen Leistungsbeiwert basierend auf einer im Zuge der Entwicklung festzulegenden Schnelllaufzahl (meist ein Wert zwischen 7 und 9) ausgelegt. Aus diesem Grund ist beim Betrieb der Windkraftanlage im Teillastbereich eine entsprechend kleine Drehzahl einzustellen, um einen optimalen aerodynamischen Wirkungsgrad zu gewährleisten.

Die Leistungsaufnahme der Anlage ist gemäß obiger Formel proportional der dritten Potenz der Windgeschwindigkeit. Der auf die Anlage wirkende Schub ist proportional dem Quadrat der Windgeschwindigkeit. Beides hängt jedoch u.a. auch noch vom eingestellten Rotor-Blattwinkel ab. Demzufolge gehen Schub und Leistung gegen Null, sobald die Rotorblätter in Richtung Segelstellung verstellt werden.

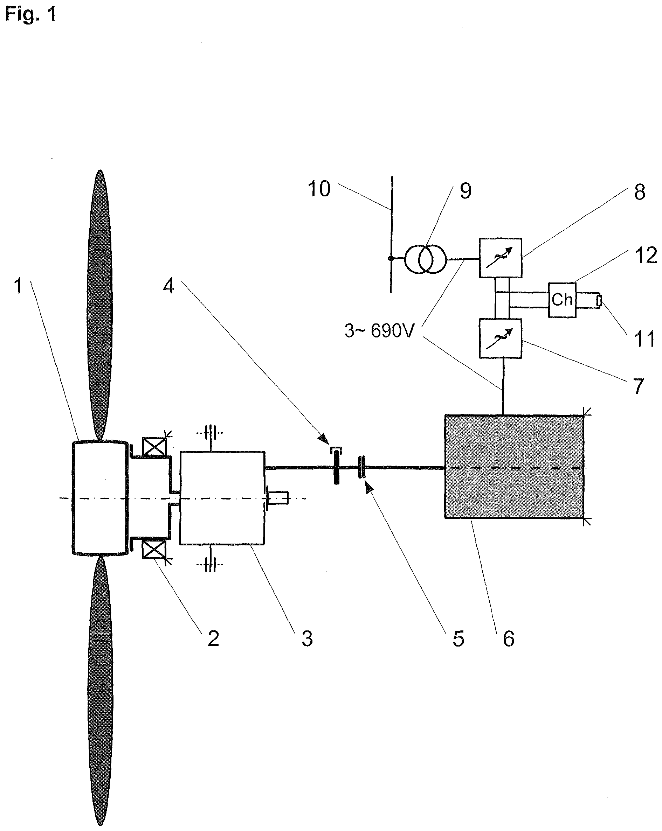

Fig. 1 zeigt eine Lösung zur Realisierung der variablen Drehzahl gemäß Stand der Technik. Der Rotor 1 der Windkraftanlage ist im Maschinenrahmen mit einer Rotorlagerung 2 gelagert. Der Rotor 1 ist in den meisten Fällen ein sogenannter Dreiblattrotor mit großteils individuell verstellbaren Rotorblättern. Durch Verstellung der Rotorblätter wird die Leistungsaufnahme des Antriebsstranges der Anlage geregelt, bzw. kann diese durch Verstellung der Rotorblätter in Richtung Segelstellung möglichst belastungsfrei abgestellt werden. Um die Anlage sicher abstellen zu können, werden die Rotorblätter meist einzeln verstellt, wodurch eine geforderte Redundanz entsteht und damit die Rotorblattverstellung auch als Notbremse dient.

In weiterer Folge treibt der Rotor 1 das Hauptgetriebe 3 an. Dieses Hauptgetriebe 3 besteht meist aus zwei Planeten- und einer Stirnradstufe. Hier gibt es jedoch in Bezug auf Anzahl und Art der Getriebestufen eine Vielzahl von Varianten. Die schnelllaufende Seite des Hauptgetriebes ist meist mittels einer Kupplung 5 mit dem Generator 6, z.B. einer permanentmagneterregten Niederspannungs-Synchronmaschine, verbunden. Aus Sicherheitsgründen gibt es ergänzend bzw. alternativ zur Rotorblattverstellung eine Notbremse 4, die in den meisten Fällen zwischen dem Hauptgetriebe 3 und dem Generator 6 angeordnet ist und welche auch nur als Festhaltebremse (z.B. für Wartungsarbeiten) ausgeführt sein kann. Die Notbremse 4 ist meist eine kraftschlüssige Vorrichtung, z.B. eine Scheibenbremse, kann aber auch als formschlüssige Vorrichtung, z.B. als Rotor-Arretierung, ausgeführt sein. Darüber hinaus kann die Notbremse 4 auch zwischen dem Rotor 1 und dem Hauptgetriebe 3 oder vor oder hinter dem Generator 6 positioniert sein. Hauptfunktion dieser Notbremse 4 ist, die Anlage bei Auftreten eines Fehlers oder zum Schutz von Personen, vorzugsweise in Kombination mit der oben erwähnten Rotorblattverstellung, sicher zum Stillstand zu bringen. Damit ist die Notbremse 4 eine autarke Schutzeinrichtung, welche (basierend auf den gültigen Normen) meist keine weiteren Betriebs-Funktionen übernehmen darf. Die zeichnerisch nicht dargestellte Rotorblattverstellung kann theoretisch auch alleine die Funktion der Notbremse 4 erfüllen, die in diesem Fall nicht erforderlich wäre. Der Generator 6 ist über einen Frequenzumrichter mit einem Gleichrichter 7 und einem Wechselrichter 8 und einen Transformator 9 an das Mittelspannungsnetz 10 angeschlossen. Mit dem den Gleichrichter 7 und den Wechselrichter 8 verbindenden Gleichstromzwischenkreis ist ein sogenannter Chopper 12 mit einem Widerstand 11 verbunden.

In den Beispielen der Fig. 1 bis 3 sind der Rotor 1 mit einer Rotorlagerung 2, das Hauptgetriebe 3, eine Notbremse 4, die Kupplung 5 und der Generator 6 die wesentlichen Bestandteile eines sogenannten Triebstranges. Bei Anlagen zur Gewinnung von Energie aus Meeresströmungen, Wasserkraftturbinen, bzw. Pumpen kann der Triebstrang ähnlich aufgebaut sein, muss aber z.B. Komponenten wie das Hauptgetriebe 3 nicht aufweisen bzw. kann andere Komponenten aufweisen.

Aufgrund eines Fehlers im Triebstrang, oder bei einem betriebsbedingten Schnell- oder Not-Stop der Anlage oder bei einem Netzfehler bzw. -ausfall kann der Generator 6 keine Leistung mehr abnehmen und es kommt zu einem Leistungseinbruch. Damit würde das den Rotor 1 antreibende Drehmoment den Triebstrang der Anlage in Überdrehzahl bringen. Um für die Anlage schädigende Drehzahlen zu verhindern, könnte man theoretisch die Notbremse 4, welche in den meisten Fällen als Scheibenbremse ausgeführt ist, aktivieren. Im Falle eines schwachen Netzes 10 fällt dieses jedoch oft aus, was in jedem Fall auch zu einem Leistungseinbruch führt. Aus sicherheitstechnischen Gründen ist daher für diesen wiederkehrenden Betriebszustand der Einsatz der Notbremse 4 nicht zulässig. Daher wird bei Anlagen gemäß Stand der Technik die Überdrehzahl durch schnelles Verstellen der Rotorblätter verhindert, wodurch eine Aktivierung der Notbremse 4 vermieden werden kann. Ein wesentlicher Nachteil dieser Methode ist, dass sich dadurch auch der auf die Anlage wirkende Schub entsprechend rasch reduziert, was vor allem zu einer hohen Belastung des Turmes der Anlage führt. Ein weitere Nachteil wäre, dass es bei kurzzeitigem Netzausfall, das ist ein Netzausfall mit kurzfristig wiederkehrender Nennspannung, kurz LVRT genannt, relativ lange dauern kann, bis die Anlage wieder auf das vor Auftreten dieses Netzfehlers produzierte Leistungsniveau kommt, da die Rotorblattverstellung wieder in die ursprüngliche Arbeitsposition zurückkehren muss, was mitunter länger dauert als dies durch die geltenden Netz-Einspeisevorschriften gefordert wird.

Aus diesem Grund werden mittlerweile bei Anlagen gemäß Stand der Technik der Chopper 12 und der Widerstand 11 so dimensioniert, dass diese die Nennleistung der Anlage für mehrere Sekunden aufnehmen und in Wärme umwandeln können. Der sich dadurch ergebende Vorteil ist, dass das Drehmoment am Triebstrang vorerst aufrecht erhalten werden kann und damit keine schnelle Rotorblattverstellung erforderlich ist, wodurch sich auch der auf die Anlage wirkende Schub nicht schlagartig verändert. Darüber hinaus kann bei Netzwiederkehr die ins Netz abgegebene Leistung schnell wieder hochgeregelt werden, da dann augenblicklich der Wechselrichter 8 wieder Leistung ins Netz abgeben kann, während der Chopper gleichzeitig die in die Widerstände abgegebene Energie zurückregelt. Im Idealfall bleibt damit das am Antriebsstrang anstehende Drehmoment während eines kurzzeitigen Netzspannungseinbruches konstant.

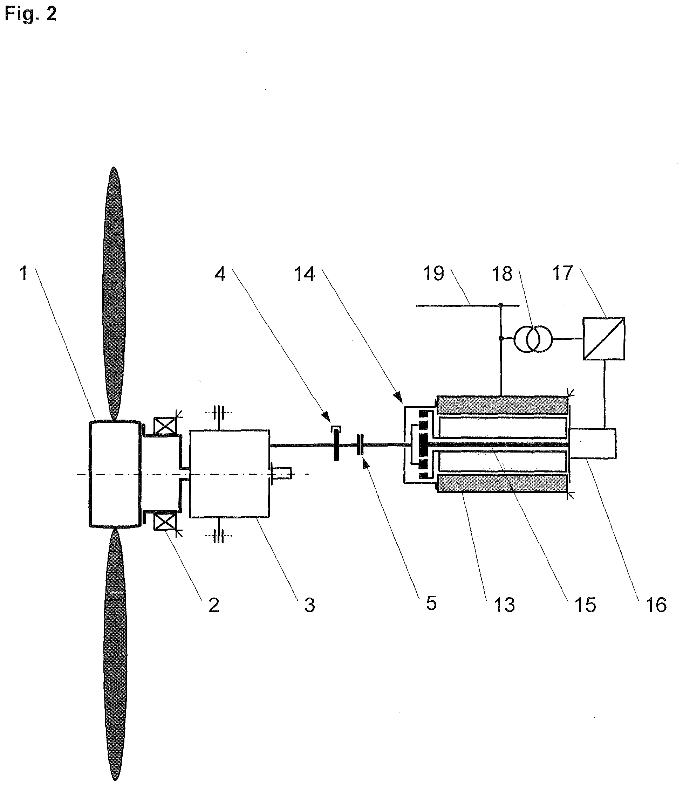

Fig. 2 zeigt ein bekanntes Konzept einer Windkraftanlage mit elektromechanischem Differenzial-Antrieb. Der Antriebsstrang der Windkraftanlage beginnt auch hier grundsätzlich beim Rotor 1 mit dessen Rotorblättern und endet mit dem Generator 13. Ebenfalls treibt auch hier der Rotor 1 das Hauptgetriebe 3 und in weiterer Folge das Differenzialgetriebe 14 an. Der Generator 13 ist mit dem Hohlrad des Differenzialgetriebes 14 verbunden und dessen Ritzel mit dem Differenzial-Antrieb 16. Das Differenzialgetriebe 14 ist in dem gezeigten Beispiel 1-stufig und der Differenzial-Antrieb 16 ist in koaxialer Anordnung sowohl zur Abtriebswelle des Hauptgetriebes 3, als auch zur Antriebswelle des Generators 13. In der gezeigten Ausführungsform ist beim Generator 13 eine Hohlwelle vorgesehen, welche erlaubt, dass der Differenzial-Antrieb 16 an der dem Differenzialgetriebe 14 abgewandten Seite des Generators 13 positioniert wird. Dadurch ist die Differenzialstufe vorzugsweise eine separate, an den Generator 13 angebundene Baugruppe, welche dann vorzugsweise über eine Notbremse 4 und eine Kupplung 5 mit dem Hauptgetriebe 3 verbunden ist. Für die Notbremse 4 gilt sinngemäß Gleiches wie schon in den Erläuterungen zu Fig. 1 ausgeführt. Die Verbindungswelle 15 zwischen Differenzialgetriebe 14 und Differenzial-Antrieb 16 wird vorzugsweise in einer besonders massenträgheitsmomentarmen Variante als z.B. Faserverbund-Welle mit Glasfaser oder Kohlefaser oder einer Kombination aus beiden Materialien, bei der unterschiedliche Abschnitte der Welle unterschiedlichen Werkstoffeaufweisen, ausgeführt. Der Differenzial-Antrieb 16 ist mittels eines Frequenzumrichters 17 und eines Transformators 18 an das Mittelspannungsnetz 19 angebunden. Wesentlicher Vorteil dieses Konzeptes ist, dass der Generator 13, vorzugsweise ein fremderregter Mittelspannungs-Synchrongenerator, direkt, das heißt ohne aufwändige Leistungselektronik, an das Mittelspannungsnetz 19 angebunden werden kann. Der Ausgleich zwischen variabler Rotordrehzahl und fixer Generatordrehzahl wird durch den drehzahlvariablen Differenzial-Antrieb 16 realisiert, welcher eine Leistung von vorzugsweise ca. 15% der Anlagen-Gesamtleistung hat.

Die Drehmomentgleichung für den Differenzial-Antrieb lautet:

$$\text{Drehmoment}_{\text{Differenzial-Antrieb}} = \text{Drehmoment}_{\text{Rotor}} * y \: / \: x \: ,$$

wobei der Größenfaktor y/x ein Maß für die Übersetzungsverhältnisse im Hauptgetriebe 3 bzw. im Differenzialgetriebe 14 ist. Das Drehmoment im Differenzial-Antrieb 16 ist immer proportional zum Drehmoment im gesamten Antriebsstrang.

Ein Nachteil dieses Konzeptes im Gegensatz zum Anlagenkonzept gemäß Fig. 1 ist jedoch, dass bei z.B. Netzausfall oder LVRT der Generator 13 keine Leistung mehr ins Netz 19 einspeisen kann. Damit würde das anstehende Drehmoment den Rotor 1 bzw. den Antriebsstrang der Anlage in Überdrehzahl bringen, sofern nicht das Rotorblatt-Verstellsystem umgehend und schnell reagiert.

Gleiches gilt auch für sogenannte doppeltgespeiste Drehstrommaschinen, bei denen der Rotor des Generators über einen Frequenzumrichter, jedoch der Stator des Generators direkt oder mittels eines Transformators mit dem Netz verbunden ist. Damit kann auch in diesem Fall bei Auftreten eines Fehlers die Leistung nicht aufrecht erhalten werden, womit gemäß Stand der Technik nur die Option mit der sich u.U. ungünstig auswirkenden schnellen Verstellung der Rotorblätter als Mittel zur Vermeidung einer Überdrehzahl übrig bleibt.

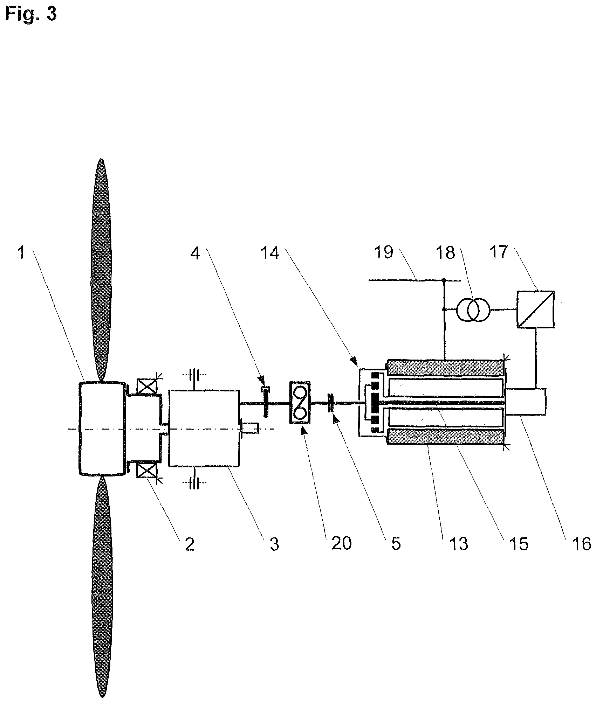

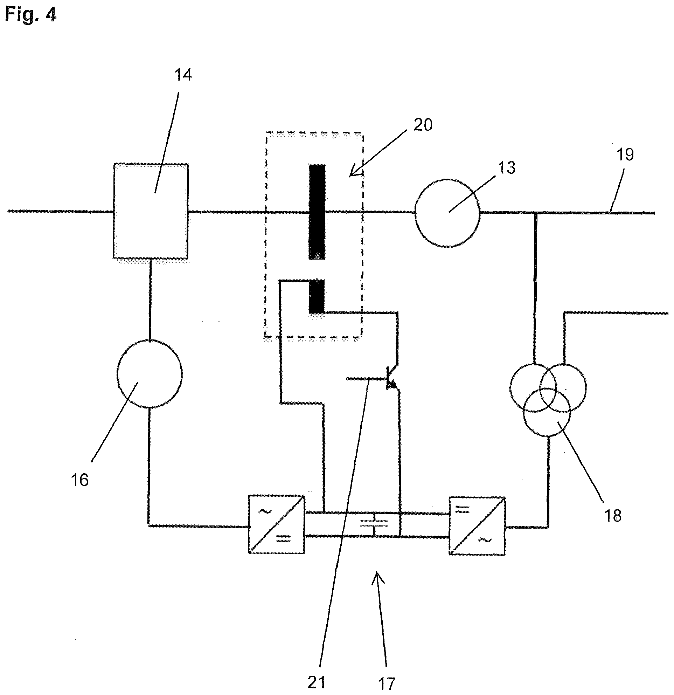

Fig. 3 zeigt den Antriebsstrang einer Windkraftanlage mit einem Differenzial-Antrieb gemäß vorliegender Erfindung. Grundsätzlich ist dieser gleich aufgebaut wie jener gemäß Fig. 2. Wesentlicher Unterschied ist jedoch, dass zwischen dem Hauptgetriebe 3 und dem Differenzialgetriebe 14 eine Betriebsbremse 20 eingebaut ist. Im dargestellten Beispiel liegt diese zwischen der Notbremse 4 und der Kupplung 5, sie kann jedoch wahlweise grundsätzlich überall im Antriebsstrang positioniert sein. Der Vorteil bei der Positionierung zwischen dem Hauptgetriebe 3 und dem Differenzialgetriebe 14 ist, dass hier das Bremsmoment auf die schnelllaufende Welle des Getriebes wirkt und dadurch ein möglichst geringes Drehmoment ansteht. Darüber hinaus teilen sich die Bremskräfte entsprechend den Massenträgheitsmomenten auf, was bewirkt, dass ein Großteil des Bremsmomentes über das Hauptgetriebe 3 auf den Rotor 1 wirkt. Damit erfahren der Generator 13 und der Differenzial-Antrieb 16 durch den Bremsvorgang eine möglichst kleine Drehmomentbelastung. Dies ist nicht der Fall, wenn die Betriebsbremse z.B. mit der Rotorwelle des Generators 13 verbunden ist und der Differenzial-Antrieb 16 damit gegen das durch eine Betriebsbremse 20 eingebrachte Bremsmoment halten muss. Erfindungsgemäß soll diese Variante, die schematisch in Fig. 4 dargestellt ist, aber nicht ausgeschlossen werden. Der Zweck der Betriebsbremse ist vergleichbar mit dem des Choppers 12 und des Widerstandes 11 aus Fig.

1, nämlich, dass diese die Nennleistung der Anlage für mehrere Sekunden zur Gänze oder sofern ausreichend auch teilweise aufnehmen und in Wärme umwandeln kann. Der sich dadurch ergebende Vorteil ist auch hier, dass ein Drehmoment am Triebstrang vorerst aufrecht erhalten werden kann und damit keine schnelle Rotorblattverstellung erforderlich ist, wodurch sich auch der auf die Anlage wirkende Schub nicht schlagartig verändert.

Im Anlassfall detektiert die Anlagensteuerung zuerst, ob es sich um einen Netzausfall oder einen zeitlich kurzen Netzfehler (ein sogenannter LVRT-Fehler) handelt, bei dem die Anlage am Netz bleiben soll oder muss. Dies nimmt abhängig von den technischen Netz-Einspeisebedingungen einen Zeitraum von ca. 0,5 bis 3 Sekunden in Anspruch, währenddessen idealerweise die Rotorblätter nicht wesentlich verstellt werden. Damit kann bei plötzlicher Wiederkehr des Netzes sehr schnell die ins Netz abzugebende Leistung hochgeregelt werden, indem die durch die Betriebsbremse 20 "vernichtete" Leistung entsprechend rasch reduziert wird. Idealerweise ist die Betriebsbremse 20 so zu regeln, dass das aus dem Antriebsstrang auf den Rotor 1 wirkende Drehmoment über diesen Zeitraum im Wesentlichen konstant bleibt oder zumindest so hoch ist, dass eine Überdrehzahl des Rotors 1 verhindert wird. Dies funktioniert viel schneller, als dies durch Verstellen der Rotorblätter realisierbar wäre. Ist dies nicht der Fall und es liegt ein anderer Fehler vor, so kann die Anlage langsam abschalten. Ein solcher Abschaltvorgang kann beispielsweise bis zu 15 Sekunden dauern, während dessen entsprechend große Energiemengen abgeführt, z.B. in Wärme umgewandelt, werden müssen. Dabei wird das aus dem Antriebsstrang auf den Rotor 1 wirkende Drehmoment nach vorzugsweise höchstens 7 Sekunden, idealerweise jedoch, um die thermische Belastung zu begrenzen, schon nach ca. 3 bis 5 Sekunden entsprechend gegen Null geregelt.

Zusammenfassend ist festzuhalten, dass die Hauptfunktion der Betriebsbremse 20 in der Begrenzung der Rotordrehzahl und/oder der Generatordrehzahl besteht, da damit ein schnelles Verstellen der Rotorblätter großteils nicht mehr erforderlich ist. Im Gegensatz dazu zielt die Notbremse 4 auf eine Stillsetzung (Rotor-Drehzahl in etwa 0 min-1) der Anlage ab.

Die Betriebsbremse 20, die gemäss der Erfindung als Retarder ausgeführt ist, kann verschiedene Ausführungsformen annehmen. Hier ist zunächst einmal die Gruppe der hydrodynamischen Retarder zu nennen. Hydrodynamische Retarder arbeiten meist mit Öl, das bei Bedarf in ein Wandlergehäuse geleitet wird. Das Wandlergehäuse besteht aus zwei rotationssymmetrischen und sich gegenüberliegenden Schaufelrädern, einem Rotor, der mit dem Antriebsstrang der Anlage verbunden ist, und einem feststehenden Stator. Der Rotor beschleunigt das zugeführte Öl und die Zentrifugalkraft drückt es nach außen. Durch die Form der Rotorschaufeln wird das Öl in den Stator geleitet, der dadurch ein bremsendes Drehmoment in den Rotor und in weiterer Folge dann auch den gesamten Antriebsstrang bremst.

Durch Reibung wird die Bewegungsenergie in Wärme umgewandelt, die durch einen Wärmetauscher wieder abgeführt werden muss, was z.B. mit Hilfe des Kühlwasserkreislaufs der Anlage erfolgen kann. Zum Aktivieren wird der Retarder vorzugsweise mit Öl aus einem Vorratsbehälter geflutet, welches durch die Schaufelräder selbsttätig wieder zurückgepumpt wird.

Eine weitere Ausführungsoption ist ein Wasser-Retarder, welcher ebenfalls nach dem hydrodynamischen Prinzip arbeitet, jedoch Wasser statt Öl als Bremsflüssigkeit verwendet. Entsprechend dem Füllungsgrad und der Drehzahldifferenz zwischen Rotor und Stator wird das Bremsmoment aufgebaut. Die dabei anfallende Energie wird im hydrodynamischen Arbeitsraum des Retarders ausschließlich in Wärmeenergie umgewandelt und direkt vom Kühlwasser aufgenommen. Das erwärmte Kühlwasser wird in diesem Fall direkt über den Kühlwasserkreislauf der Anlage gekühlt. Dieser Kühlwasserkreislauf ist meist ohnehin vorhanden, um z.B. den Generator 13, den Differenzial-Antrieb 16 und den Frequenzumrichter 17 etc. kühlen zu können.

Bei einem elektrodynamischen Retarder als Betriebsbremse, z.B. einer Wirbelstrombremse, sind z.B. zwei Stahlscheiben (Rotoren), die nicht magnetisiert sind, mit dem Antriebsstrang verbunden. Dazwischen liegt der Stator mit elektrischen Spulen. Wenn durch Aktivierung des Retarders Strom eingesteuert wird, werden Magnetfelder erzeugt, die durch die Rotoren geschlossen werden. Die gegenläufigen Magnetfelder erzeugen dann die Bremswirkung. Die entstandene Wärme wird z.B. durch innenbelüftete Rotorscheiben wieder abgegeben.

Ein wesentlicher Vorteil eines Retarders als Betriebsbremse ist dessen Verschleißfreiheit und gute Regelbarkeit. So kann das Bremsmoment abhängig vom Betriebszustand der Anlage, bzw. über den Verlauf eines Bremsmanövers verstellt bzw. optimiert werden.

Fig. 4 zeigt einen Differenzial-Antrieb gemäß einer weiteren Ausführungsform der Erfindung. Im gezeigten Beispiel ist die Betriebsbremse 20 mit der Rotorwelle des Generators 13 verbunden. Die Betriebsbremse 20 ist hierbei als elektrodynamischer Retarder ausgeführt. Die Leistung für die Erregung der Betriebsbremse 20 wird einem Gleichstromzwischenkreis des Frequenzumrichters 17 entnommen. Damit wirkt der Differenzial-Antrieb 16 zusätzlich als Bremse. Mittels einer steuerbaren Halbleiter-Brücke 21, vorzugsweise ein IGBT, kann der Erregerstrom für den Retarder 20 entsprechend dem erforderlichen Bremsmoment geregelt werden. Das erforderliche Bremsmoment für die Betriebsbremse 20 hängt von der Betriebsführung der Anlage ab. Bei Windkraftanlagen kann dies gemäß der Beschreibung zu Fig. 2 bis ca. die Höhe des Nenn-Drehmomentes des Triebstranges erreichen, kann bei Bedarf aber auch höher sein. Bei optimaler Abstimmung zwischen der Rotorblattverstellung, der erlaubten Überdrehzahl für die Komponenten des Triebstrangs und dem Bremsmoment der Betriebsbremse kann das erforderliche Bremsmoment für die Betriebsbremse 20 jedoch auch wesentlich geringer sein.

Das auf den Triebstrang wirkende Bremsmoment verteilt sich auf die Rotorwelle des Generators 13 und den Differenzial-Antrieb 16 entsprechend der Übersetzung des Differenzialgetriebes 14. Bei einem Übersetzungsverhältnis von z.B. 5 erhöht sich das auf den Triebstrang wirkende Bremsmoment, im Vergleich zu einem wie in Fig. 3 positionieren Retarder, um ca. 20%.

Darüber hinaus ist das in Fig. 4 dargestellte System sehr gut regelbar. Der Frequenzumrichter 17 kann erfindungsgemäß wie in der WO 2010/121783 A oder der WO 2013/020148 A beschrieben ausgeführt sein und betrieben werden und einen elektrischen Energiespeicher bzw. einen Chopper mit einem Widerstand, im Zwischenkreis aufweisen. Damit ist auch die für die Erregung des elektrodynamischen Retarders 20 notwendige Energie jederzeit verfügbar, was den Einsatz der Betriebsbremse 20 unabhängig vom Zustand des Netzes 19 ermöglicht.

Aufgabe der Regelung ist dabei, eine Überdrehzahl des Triebstranges zu verhindern, wobei gleichzeitig, z.B. im LVRT-Fall, die Drehzahl bzw. der Phasenwinkel des Generators 13 konstant gehalten werden kann. D.h. der Differenzial-Antrieb 16 und der damit verbundene Frequenzumrichter 17 haben in dieser Ausführungsform erfindungsgemäß zwei Funktionen zu erfüllen. Erstens die Versorgung der Betriebsbremse 20 mit Erregerstrom aus dem Gleichstromzwischenkreis des Frequenzumrichters 17 und zweitens die Regelung der Drehzahl des Generators 13, um bei Netzwiederkehr im Wesentlichen phasengleich mit dem Netz 19 zu sein.

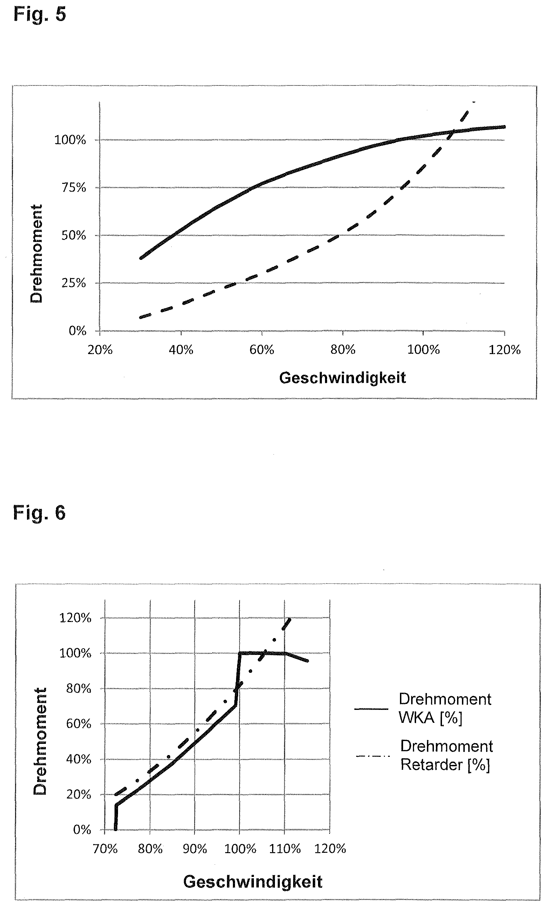

Fig. 5 zeigt mögliche Kennlinien für Retarder. Beispielhaft sind hier eine durchgängige Linie als typische Kennlinie für einen hydrodynamischen Retarder und eine strichlierte Line als typische Kennlinie eines elektrodynamischen Retarders dargestellt. Durch spezifische Auslegung des Retarders, kann dessen Auslegungs-Kennlinie den Anforderungen angepasst werden. Im Betrieb sind die Kennlinien für hydrodynamische Retarder durch Variation des Füllungsgrades bzw. für elektrodynamische Retarder durch Variation des Erregerstroms veränderbar.

Beispielsweise wird die Kennlinie für die Betriebsbremse 20 so festgelegt, dass sie der Drehzahl/Drehmoment-Kennlinie der Anlage möglichst nahe kommt, wodurch z.B. bei Netzausfall das Verhalten der Anlage gegenüber Normalbetrieb kaum verändert wird. In diesem Zusammenhang bietet sich ein hydrodynamischer Retarder bei Einsatz an einer Strömungsmaschine besonders gut an, da ein Retarder grundsätzlich ebenfalls eine kubische Kennlinie hat und damit ein etwa notwendiger Regelungsaufwand gering gehalten werden kann.

Bei einer Drehzahl gleich Null erzeugt der Retarder kein Bremsmoment. Da im Falle von Energiegewinnungsanlagen bei geringer Anlagendrehzahl auch nur ein geringes Drehmoment ansteht, entsteht dadurch jedoch kein anwendungsspezifischer Nachteil.

Dies zeigt Fig. 6. Die durchgängige Linie zeigt dabei eine typische Drehmoment/Drehzahl-Kennlinie für eine Windkraftanlage. Dabei beschreibt der Punkt mit 100% Drehzahl bzw. 100% Drehmoment den Nennpunkt der Windkraftanlage. Um ca. 105% der Drehzahl pendelt sich die Anlage im Nennbetrieb bei vorzugsweise konstantem Drehmoment ein. Über einer Drehzahl von 110% nimmt das Drehmoment wieder ab, wobei dabei bis zu einer Drehzahl von 115% die Anlage mit konstanter Leistung betrieben wird. Bei Überschreitung von 115% der Drehzahl wird die Anlage meist vom Netz genommen. Im Betriebsbereich unter dem Nennpunkt, wird versucht einer kubischen Kennlinie möglichst nahe zu kommen, wobei hier auslegungsspezifische Drehzahlgrenzen einzuhalten sind.

Die strichlierte Linie ist die Kennlinie des Retarders, welche vorzugsweise eine kubische Linie beschreibt. Im mittleren Betriebspunkt im Nennbetrieb der Anlage, welcher beispielweise bei ca. 105% der Drehzahl liegt, schneidet sich die Drehmomentlinie der Windkraftanlage mit der Kennlinie des Retarders.

In einer besonders einfachen Ausführungsvariante wird auf die Variation des Füllungsgrades verzichtet und die Kennlinie so gelegt, dass im Schnittpunkt der beiden Kennlinien ein Bremsmoment in der Höhe des Nenndrehmomentes der Anlage erreicht wird. Da der Rotor der Windkraftanlage, wenn die Rotorblattverstellung nicht aktiv ist, ebenfalls einer kubischen Kennlinie folgt, wird die Anlage im Falle eines kurzzeitigen Netzausfalles durch die Betriebsbremse 20 ausreichend in Balance gehalten. Damit ist zwar die Wirkung nicht für alle Betriebsbereiche perfekt, da jedoch ein Leistungseinbruch im Betrieb der Anlage mit hoher Leistung eine besonders schädigende Auswirkung hat, ist diese Vereinfachung ein guter Kompromiss zwischen einerseits Verhalten der Anlage im Fehlerfall und andererseits Komplexität einer Betriebsbremse 20. Die in Fig. 6 dargestellte Drehmomentkennlinie der Betriebsbremse 20 verläuft über einen Großteil des Betriebsbereiches annähernd im Bereich der Drehmomentkennlinie der Windkraftanlage. Durch exakte Regelung des Füllungsgrades bzw. der Erregerstroms kann eine noch bessere Übereinstimmung der beiden Kennlinien erreicht werden bis hin zu einer weitgehend exakten Überdeckung beider Kennlinien. Im Betrieb der Anlage wird sich die Drehzahl des Antriebsstranges jedoch ohnehin auf die Kennlinie der Betriebsbremse einpendeln und dadurch eine Überdrehzahl verhindert werden. Die bei Netzwiederkehr abzugebende Leistung, kann dann durch die Leistungsregelung der Anlage entsprechend den Anforderungen aus den Netz-Einspeisebedingungen bzw. den vorgegebenen Betriebsbedingungen geregelt werden.

In dem beschriebenen Ausführungsbeispiel ist die Arbeitsmaschine der Rotor einer Windkraftanlage. Anstelle dessen sind jedoch auch Rotoren zur Gewinnung von Energie aus Meeresströmungen, Wasserkraftturbinen, bzw. Pumpen einsetzbar. Darüber hinaus ist die erfindungsgemäße Ausführung auch für industrielle Anwendungen anwendbar, um z.B. bei einer Systemstörung im Betriebsmodus bremsen zu können, um eine Überdrehzahl im Fehlerfall zu verhindern.

Erfindungsgemäß ist die Betriebsbremse (20) auch für Energiegewinnungsanlagen gemäß Fig. 1 einsetzbar, wobei die Betriebsbremse im Antriebsstrang insbesondere zwischen dem Hauptgetriebe 3 und dem Generator 6 angeordnet ist.

## Patentansprüche

1. Verfahren zum Regeln des Betriebes eines Antriebsstrangs einer Energiegewinnungsanlage mit einer mit einem Netz (10, 19) verbundenen elektrischen Maschine (6, 13) und mit einem Rotor (1), der mit der elektrischen Maschine (6, 13) verbunden ist, **dadurch gekennzeichnet, dass** im Fall eines Netzausfalles, Netzfehlers oder einer Notabschaltung eine als Retarder ausgeführte Betriebsbremse (20) aktiviert wird, sodass das aus dem Antriebsstrang auf den Rotor (1) wirkende Drehmoment über einen Zeitraum von wenigstens 0,5 Sekunden im Wesentlichen konstant bleibt oder zumindest so hoch ist, dass eine Überdrehzahl des Rotors (1) verhindert wird.

2. Verfahren nach Anspruch 1, **dadurch gekennzeichnet, dass** das aus dem Antriebsstrang auf den Rotor (1) wirkende Drehmoment über einen Zeitraum von bis zu 7 Sekunden, bevorzugt bis zu 5 Sekunden, im Wesentlichen konstant bleibt.

3. Verfahren nach Anspruch 1, **dadurch gekennzeichnet, dass** das aus dem Antriebsstrang auf den Rotor (1) wirkende Drehmoment über einen Zeitraum von bis zu 3 Sekunden im Wesentlichen konstant bleibt.

4. Verfahren nach einem der Ansprüche 1 bis 3, **dadurch gekennzeichnet, dass** das Bremsmoment der Betriebsbremse (20) in einem weiteren Zeitraum von 5 bis 20 Sekunden, vorzugsweise von 10 bis 15 Sekunden, auf etwa Null verringert wird.

5. Verfahren nach einem der Ansprüche 1 bis 4 zum Regeln des Betriebes eines Antriebsstrangs einer Energiegewinnungsanlage mit einem Differenzialgetriebe (14) mit drei An- bzw. Abtrieben, wobei die elektrische Maschine ein Generator ist, wobei ein erster Antrieb mit dem Rotor (1), ein Abtrieb mit dem Generator (13) und ein zweiter Antrieb mit einem Differenzial-Antrieb (16) verbunden ist, der mittels eines Frequenzumrichters (17) und gegebenenfalls eines Transformators (18) an ein Stromnetz (19) angeschlossen ist, **dadurch gekennzeichnet, dass** die Betriebsbremse (20) eine elektrodynamische Bremse ist, die an einen Gleichstromzwischenkreis des Frequenzumrichters (17) angeschlossen ist.

6. Verfahren nach einem der Ansprüche 1 bis 4, **dadurch gekennzeichnet, dass** die elektrische Maschine eine doppelt gespeiste Drehstrommaschine ist.

7. Verfahren nach einem der Ansprüche 1 bis 6, **dadurch gekennzeichnet, dass** die Drehzahl der elektrischen Maschine (6, 13) bis zu einer Netzwiederkehr im Wesentlichen phasengleich gehalten wird.

## Claims

1. Method for regulating the operation of a drive train of an energy production plant comprising an electric machine (6, 13), which is connected to a grid (10, 19), and a rotor (1), which is connected to the electric machine (6, 13), **characterized in that**, in the event of a network failure, network fault or an emergency shutdown, a service brake (20) configured as a retarder is activated so that for a duration of at least 0.5 seconds the torque acting on the rotor (1) from the drive train remains substantially constant or is at least high enough to prevent overspeed of the rotor (1).

2. Method according to claim 1, **characterized in that** the torque acting on the rotor (1) from the drive train remains substantially constant for a duration of up to 7 seconds, preferably up to 5 seconds.

3. Method according to claim 1, **characterized in that** the torque acting on the rotor (1) from the drive train remains substantially constant for a duration of up to 3 seconds.

4. Method according to one of claims 1 to 3, **characterized in that** the braking torque of the service brake (20) is reduced to approximately zero within a further duration of 5 to 20 seconds, preferably 10 to 15 seconds.

**5.** Method according to one of claims 1 to 4 for regulating the operation of a drive train of an energy production plant comprising a differential gear (14) with three drives and outputs, respectively, wherein the electric machine is a generator, wherein a first drive is connected to the rotor (1), an output is connected to the generator (13), and a second drive is connected to a differential drive (16) which is connected to a power grid (19) by means of a frequency converter (17) and optionally a transformer (18), **characterized in that** the service brake (20) is an electrodynamic brake which is connected to a DC link of the frequency converter (17).

**6.** Method according to one of claims 1 to 4, **characterized in that** the electric machine is a double-fed three-phase machine.

**7.** Method according to one of claims 1 to 6, **characterized in that** the speed of the electric machine (6, 13) is kept substantially in phase until the network is restored.

**Revendications**

**1.** Procédé pour réguler le fonctionnement d'une chaîne cinématique d'une installation de génération d'énergie avec une machine électrique (6, 13) reliée à un réseau (10, 19) et avec un rotor (1) qui est relié à la machine électrique (6, 13), **caractérisé en ce qu'**en cas de panne du réseau, de défaut du réseau ou d'arrêt d'urgence, un frein de service (20) conçu comme un retardateur est activé, de sorte que le couple exercé par la chaîne cinématique sur le rotor (1) pendant un intervalle de temps d'au moins 0,5 seconde reste sensiblement constant ou est du moins suffisamment élevé pour empêcher un surrégime du rotor (1).

**2.** Procédé selon la revendication 1, **caractérisé en ce que** le couple exercé par la chaîne cinématique sur le rotor (1) reste sensiblement constant pendant un intervalle de temps pouvant aller jusqu'à 7 secondes, de préférence jusqu'à 5 secondes.

**3.** Procédé selon la revendication 1, **caractérisé en ce que** le couple exercé par la chaîne cinématique sur le rotor (1) reste sensiblement constant pendant un intervalle de temps pouvant aller jusqu'à 3 secondes.

**4.** Procédé selon l'une des revendications 1 à 3, **caractérisé en ce que** le couple de freinage du frein de service (20) est réduit à environ zéro dans un autre intervalle de temps de 5 à 20 secondes, de préférence de 10 à 15 secondes.

**5.** Procédé selon l'une des revendications 1 à 4 pour réguler le fonctionnement d'une chaîne cinématique d'une installation de génération d'énergie avec un mécanisme différentiel (14) comportant trois entraînements ou le cas échéante sorties d'entraînement, dans lequel la machine électrique est un générateur, dans lequel un premier entraînement est relié au rotor (1), une sortie au générateur (13) et un deuxième entraînement à un entraînement différentiel (16) qui est raccordé à un réseau électrique (19) au moyen d'un convertisseur de fréquence (17) et éventuellement d'un transformateur (18), **caractérisé en ce que** le frein de service (20) est un frein électrodynamique qui est raccordé à un circuit intermédiaire de courant continu du convertisseur de fréquence (17) .

**6.** Procédé selon l'une des revendications 1 à 4, **caractérisé en ce que** la machine électrique est une machine à courant triphasé à double alimentation.

**7.** Procédé selon l'une des revendications 1 à 6, **caractérisé en ce que** la vitesse de rotation de la machine électrique (6, 13) est maintenue sensiblement en coïncidence de phase jusqu'au rétablissement du réseau.

# Fig. 1

**Fig. 2**

**Fig. 3**

**Fig. 4**

## Fig. 5

## Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110169268 A
- US 20070216164 A1
- JP S5977082 A
- DE 196464 A
- WO 2010121783 A
- WO 2013020148 A